(19) **Europäisches Patentamt**

**European Patent Office**

**Office européen des brevets**

(11) **EP 0 997 322 B1**

(12) **EUROPEAN PATENT SPECIFICATION**

(45) Date of publication and mention
of the grant of the patent:
**09.07.2003 Bulletin 2003/28**

(51) Int Cl.$^7$: **B60C 9/22**, B60C 9/00

(21) Application number: **98120356.5**

(22) Date of filing: **28.10.1998**

(54) **Rubberized fabric and tire with zero-degree reinforcing elements**

Gummierte Verstärkungslage und Reifen mit Nul-Grad-orientierten Verstärkungselementen

Armature de caoutchoutée et bandage pneumatique à renforts orientés à zéro degré

(84) Designated Contracting States:
**AT BE DE ES FR GB IT LU PT SE**

(43) Date of publication of application:
**03.05.2000 Bulletin 2000/18**

(73) Proprietor: **PIRELLI PNEUMATICI Società per Azioni**
**20126 Milano (IT)**

(72) Inventors:
 • **Riva, Guido**
  **20155 Milano (IT)**
 • **Orjela, Gurdev**
  **6700 Arlon (BE)**
 • **Boiocchi, Maurizio**
  **20090 Segrate (MI) (IT)**

(74) Representative: **Guella, Paolo et al**
**Pirelli S.p.A.**
**Direzione Proprietà Industriale**
**Viale Sarca, 222**
**20126 Milano (IT)**

(56) References cited:
**EP-A- 0 290 328       GB-A- 1 524 294**
**US-A- 5 242 002**

• **PATENT ABSTRACTS OF JAPAN vol. 017, no. 237 (M-1408), 13 May 1993 & JP 04 362401 A (TOYO TIRE & RUBBER CO LTD), 15 December 1992**

**Description**

BACKGROUND OF THE INVENTION

Field of the Invention

The present invention refers to rubberized fabrics for tires having zero-degree reinforcing elements and to tires incorporating such fabrics.

Description of the Related Art

As is known, a tire includes at least three fundamental components, the carcass, the tread band, and the reinforcing belt between the tread band and the carcass. The carcass, usually at least one ply, is turned out at both ends around a pair of bead cores. Together, the bead cores, the ends of the carcass, and whatever rubberized filler is added between the bead cores and the ends of the carcass cooperate to form the beads on either side of the tire.

When in use, a tire is placed on a wheel rim, which has two seats axially displaced from one another. The two beads on either side of the tire rest on the two rim seats. Each of the rim seats terminates in an end flange, which has an outermost diameter greater than the diameter of the tire beads, which prevents the beads from slipping off of the wheel rim once the tire is installed on the rim.

The belts of a conventional tire generally consist of at least three rubberized fabrics. The first two fabrics comprise fine cords that crisscross each other and are both angled with respect to the equatorial plane of the tire. The third fabric is external radial belt made from fine cords of heat-shrinkable material including synthetic fibers, oriented at 0° with respect to the equatorial plane of the tire, such as commonly nylon. In one common embodiment, the third layer consists of nylon cords 0.39 mm in diameter embedded in a 0.7-mm-thick rubberized fabric.

To form the tread pattern on a tire, an uncured or "green" tire is placed in a mold, which carries on its interior surface the pattern for the tread of the tire. During the tread forming step in the manufacturing process, the mold is pushed into the tire to imprint the tread pattern onto the tire. At the same time, the tire is inflated, causing the layers with crisscrossed cords to expand toward the interior surface of the mold. This expansion helps to push the tread band against the surface of the mold so that it can accept the tread pattern from the mold. As the tire expands when inflated, the crisscrossed cords are pushed outwardly, diminishing the angle of inclination of the cords with respect to one another. The third belt layer, with its heat-shrinkable synthetic fiber cords, exerts a force on the layers beneath it to limit their outward movement during the tread-forming stage.

Not only does the third belt layer serve a purpose in the manufacture of a tire, it also is important to the operation of a tire when the tire is mounted on a rim. The third belt layer helps to counteract the outward expansion of the underlying layers, which is caused by the large centrifugal forces that act on the belts at high speeds.

The synthetic fiber cords, however, have at least one disadvantage. They are known to temporarily deform in a tire in a phenomenon known as "flatspotting." When the vehicle is stopped, the entire weight of the car rests on one spot on each of the tires. This causes a flattening of each tire in the footprint or imprint area where the tire contacts the ground. Because the synthetic fibers are prone to creep under stress, they distort in the imprint area. Even after the vehicle begins to move and the tire rotates, the flattened region persists in the imprint area for a prolonged period of time. Such a phenomenon is typical of all synthetic materials. The phenomenon varies from material to material depending on the viscoelastomeric characteristics of the particular synthetic fiber in question. Consequently, at least for a certain period after the tire rotates following flatspotting, the temporary deformation of the synthetic cords generates a noise effect and uncomfortable behaviour.

To avoid this phenomenon, it is known to incorporate zero-degree metallic cords (oriented at zero degrees with respect to the equatorial plane of the tire) in the third belt rather than cords of synthetic material. The metallic cords are sufficiently rigid to resist deformation when the vehicle is stopped. Tires made according to this teaching do not exhibit the phenomenon of "flatspotting" because they incorporate metallic cords rather than cords made from a viscoelastic material.

When the third belt layer is constructed with metallic cords, it is known to use cords made of some strands twisted together of the so called "lang lay type" that provides cords with high elongation prior to reaching their breaking point, and, because of this, the cords are also known in the prior art as "HE" (high-elongation) cords. In such an embodiment, the metallic cords act like a spring wire, which is evident from studying a typical stress-deformation diagram for these materials.

The first segment of the stress-deformation diagram for metallic cords is identified by a small or weak slope with respect to the abscissa. This first segment of the stress-deformation diagram is useful because it can be used to predict the behavioral characteristics of the metal during the tread band forming stage where the material exhibits high elongation at low loads. The next, strongly sloped segment of the stress-deformation diagram is useful for determining the behavioral characteristics of the metal during operation of the tire, where the material exhibits only slight elongation under a high load.

The overall diameter of metallic cords suitable for this purpose may be 0.7 mm in a zero-degree fabric used in the manufacturing of large tires. However, such a cord size is too large to be compatible with the dimensions required for a belt fabric in an automobile tire.

Belt structures with metal cords made from shape-memory materials are also known in the art, e.g., U.S. Patent 5,242,002 and Japanese Patent Application JP 4362401. In U.S. Patent 5,242,002, a tire is described with belts having cords symmetrically inclined with respect to the equatorial plane of the tire. The cords are formed by helically winding several wires together. At least one of the wires in the cord is made from a shape-memory material. The shape-memory wire, before being cabled with the other wires, undergoes a heat treatment at a predetermined temperature while it is in a particular configuration (for example undulated) and is subsequently deformed into a linear configuration below the temperature of the heat treatment; accordingly, said wire recover the undulated configuration above the heat treatment temperature.

Each time the temperature of the tread band increases at high speeds, the temperature of the belt exceeds that of the heat treatment of the shape-memory wire, and the wire tends to take on the undulated shape. However, since the shape-memory wire is corded with the other wires, the shape-memory wire cannot deform but, instead, is subject to tension. As a result, in the shape-memory wire, a stress is established, the effect of which is to increase the rigidity of the belt and, accordingly, avoid an increase in the diameter of the tire caused by centrifugal forces.

Japanese Patent Application JP 4362401 discloses a tire with an outermost belt having an outermost layer comprising a shape-memory expansion element, preferably a spring wire element made from a Ni-Ti alloy. The spring wire element is wound at zero degrees over the underlying layers of the belt. The shape-memory element is designed to contract in the peripheral direction of the tire when the wire is heated during high speed use. In this way, at high speeds, the tire becomes more rigid and the phenomenon of tire expansion is controlled. On the other hand, at low speeds, such as those encountered under normal traveling conditions, the shape-memory element returns to and maintains its original shape. The Japanese application describes wires from 0.25 to 0.5 mm in diameter. Finally, the Japanese application discloses that it is not necessary for the shape-memory expansion element in the tire to be spring wire shaped, but that it can be shaped as a belt or cord, for example.

SUMMARY OF THE INVENTION

Confronted with the state of the art set forth above, it was believed possible to provide a single solution both to the problem of flatspotting and to the problem of the outward expansion of the belt when the associated tire is subjected to the large centrifugal forces during high speed use. Furthermore, it was believed that the dimensions of the materials used (and, therefore, the thickness of the belt created) could be kept at least at the levels known in the art, if not reduced.

It was believed that the problems of flatspotting and centrifugal expansion could be addressed simultaneously if zero-degree metal reinforcements were used that exhibited both (1) a correct geometric orientation in the rubberized fabric and (2) a high degree of resistance to fatigue.

GB-1,524,294 relates to reinforcing membres suitable for use in rubber composite structures. More particularly, said document concerns a steel ribbon provided with a coating on the surface thereof for bonding the steel to rubber. Said steel ribbon is essentially rectangular in cross-section, has a width in the range 0.254 to 5.08 mm, a thickness in the range 0.127 to 0.508 mm, a width to thickness ratio greater than 2, a tensile strength greater than 14.062 kg/cm$^2$ and a microstructure of tempered martensite, bainite or a mixture thereof. Said steel ribbon may be used in a tire as bias belts that are assembled so that the ribbons in each belt are disposed at angles of approximately 15° to 30° to the midcircumferential plane of the tire but in an opposite sense to each other.

One problem that had to be addressed, however, was how to maintain the correct geometric orientation of the reinforcing elements in the rubberized fabric. In the prior art, the reinforcing elements are known to have an uneven distribution in the fabric layer. It is believed that this uneven distribution is caused by the application of high pressure to the tire during the manufacturing process. Specifically, it is believed that the inflation pressure exerts a force on the reinforcing elements that displaces them from their intended positions before the tire solidifies.

Maintaining the correct geometry of the reinforcing elements in the fabric during manufacture is only part of the problem, however, because the cords are also prone to move in the fabric during operation of the tire. In use, the cord coils may compress into the elastomeric material. Since the diameter of the cords is so small, they are believed to act like knives, creating small cuts and tears in the elastomer over time. As a result, over time, the cords begin to move about within the elastomer and, in extreme cases, may even exit the material, creating a risk that the reinforcing elements might contact the metallic reinforcement cords in the immediately underlying layer. If the cords in different layers contact each other, they can generate sufficient friction to compromise the integrity of the tire fabric.

Fatigue stress is another factor that must be considered when designing a reinforced tire fabric. Fatigue stress can be attributed to two particular events as the tire rotates. First, in the undeformed portion of the tire, the radially outermost portion of the cord is subject to traction and assumes a bending deformation proportional to the distance from its neutral longitudinal axis and inversely proportional to the radius of curvature of the undeformed tire. Second, in the transition between the undeformed portion of the tire and the area of imprint, the same portion of the cord is subjected to a deformation force considerably greater than the previous one, since the deformation becomes inversely proportional to the new radius of curvature of the tire, which is noticeably smaller than the radius of curvature corresponding to the undeformed tire geometry. Similarly, the innermost portion of the cord deforms according to the same relationship, a deformation that is proportional to the distance of the considered fiber from the neutral axis and inversely proportional to the radii of curvature assumed by the tire, respectively, first in the undeformed condition and then in the deformed condition in proximity to the area of the imprint.

One way to reduce this fatigue is to reduce the diameter of the cords. While the 0.39 mm nylon cord of the typical reinforcing element may seem small, that dimension is actually quite large when examining the cord from the perspective of the fatigue stress on the cord. However, as the diameter of the cords is reduced, the potential for problems related to the possibility that the cords might cut through the elastomeric material, as discussed above, increases.

Once the various factors associated with the interaction of the reinforcing elements in the rubberized fabric were appreciated in accordance with the development of the present invention, a solution was selected that addressed both the need for the correct placement of the zero-degree reinforcing elements into the incorporating fabric and also the need for a fabric with a high resistance to fatigue. One of the improvements selected was the incorporation of zero-degree reinforcements made of shape-memory alloy in the shape of metal straps. For such a configuration, it was thought that a specific width of the metal strap could be determined and used to stabilize the strap in the elastomeric material. Moreover, it was thought that such a configuration would react differently to the air pressure in the tire and would resist the tendency to cut through the elastomeric material. It was also thought that if the thickness of the metal strap was noticeably smaller than that of the corresponding cords used in the prior art, resistance to fatigue as the tire rolls over the ground could be considerably increased.

Therefore, a first aspect of the present invention is characterized by a rubberized fabric for a tire belt incorporating an elastomeric material with at least one continuous reinforcing metal strap. The strap is made from a shape-memory material that is oriented at 0 degrees to the equatorial plane of the tire. The minimum width of the strap is 1 mm. The maximum thickness of the rubberized fabric is 0.4 mm.

In the first aspect of the present invention, the reinforcing elements are held firmly in place or stabilized in a predetermined position in the rubberized fabric because the reinforcing elements are metal straps disposed in a side-by-side arrangement. The minimum width of the metal straps is 1 mm and the thickness of the rubberized fabric incorporating the metal straps has a maximum thickness of 0.4 mm. Each coil of the metal straps is oriented substantially perpendicularly to the direction of the force from the air pressure inside the tire. With such an orientation, the metal straps resist compression into the rubberized fabric.

Preferably, the fabric includes metal straps between 1 and 5 mm wide and between 0.02 and 0.1 mm thick, inclusive. In a preferred embodiment of the present invention, the thickness of each metal strap is no greater than one tenth of its minimum width. The metal straps of the present invention are preferably made from a shape-memory material such as a NiTi alloy, a NiTiX alloy, where X is selected from a combination of Fe, Cu, or Nb, a CuZnAl alloy, a CuAlNi alloy, a CuAlBe alloy, a FeNiCoTi alloy, a FeMnSi alloy, an alloy with a FeMnSi-base, or an alloy with a FeNiCo-base. Being made of a shape-memory material, the reinforcing straps, when heated, try to return to a predetermined, memorized length.

In a second embodiment of the present invention, the tire comprises a carcass, a tread band on the carcass, and a belt positioned between the tread band and the carcass including at least one layer of rubberized fabric. The belt incorporates at least one continuous reinforcing metal strap made from a shape-memory material that is oriented at 0° to the equatorial plane of the tire. The metal strap has a minimum width of 1 mm and is wound with coils arranged side-by-side, perpendicularly to the radius of the tire.

In the second embodiment of the present invention, the reinforcing belt is further characterized by including means to stabilize the reinforcing straps in a predetermined position within the fabric. The position of the reinforcing straps is stabilized by shaping the reinforcing elements as side-by-side metal straps, the minimum width of each metal strap being 1 mm and the maximum thickness of the rubberized fabric being 0.4 mm. Each coil of the metal straps is oriented substantially perpendicularly to the direction of the force from the air pressure inside the tire, thereby resisting compression of the reinforcing strap into the elastomeric material in which the reinforcing strap is incorporated. In one preferred embodiment, the metal straps are distributed evenly in the tire with a 0.1 mm separation between adjacent straps.

In yet another preferred embodiment, the metal straps in the fabric tend to recover a previously memorized shape by exerting contractive forces on the innermost fabrics of the belt between two predetermined temperatures, $A_s$ and $A_f$, respectively. $A_s$ corresponds to a temperature at the start of the structural transformation of the metal strap from a martensitic state to an austenitic state. $A_f$ corresponds to a temperature at the completion of the structural transformation of the metal strap from the martensitic state to the austenitic state.

It should be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of the specification, illustrate several embodiments of the invention, and, together with the general description given above and the detailed description of the embodiments given below, serve to explain the principles of the invention.

In the drawings:

Figure 1 is a partial perspective view of a portion of a tire according to the present invention with sections removed for purposes of illustration;

Figure 2 is a transformation diagram illustrating the structural transformation of the reinforcing metal straps of the present invention as a function of the temperature of the shape-memory material from which the reinforcing metal straps are constructed;

Figure 3 is a stress-deformation diagram of a reinforcing metal strap in accordance with the present invention;

Figure 4 is a stress-temperature diagram of an outermost belt in accordance with the present invention, having coils of metal straps oriented at zero degrees to the equatorial plane of the tire;

Figure 5 is a cross-section of a layer of an outermost belt, showing zero-degree cords constructed in accordance with the prior art;

Figure 6 is a cross-section of a layer of a belt with coils of zero-degree metal straps constructed in accordance with the present invention as may be used in a tire, such as the one shown in Figure 1;

Figure 7 is an illustrative schematic representation of the radii of curvature of a tire in an undeformed state and in the state between the undeformed portion and an imprint area;

Figure 8 shows the bending deformation of a portion of one of the zero-degree reinforcing elements constructed according to the present invention in an undeformed portion of a tire;

Figure 9 shows the direction of the zero-degree reinforcing elements in the area of imprint of a tire constructed according to the present invention;

Figure 10 shows the area of imprint of Figure 9 as a result of a "bean" deformation, which is the type of deformation to which a tire may be subjected when in a turn or on a curve; and

Figure 11 is a schematic representation of a portion of a compression-loaded, zero-degree metal strap and the possible configuration of that strap when deformed to the point of collapse.

DESCRIPTION OF THE PREFERRED EMBODIMENTS

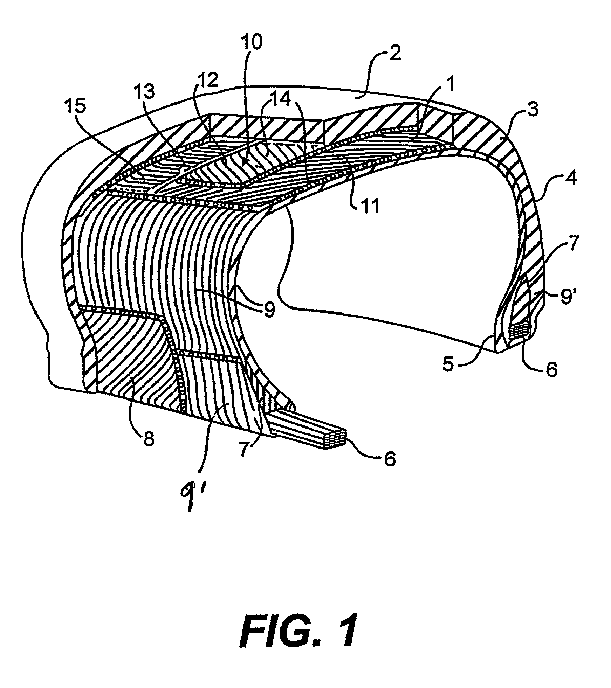

Figure 1 illustrates a radial tire according to the present invention. Tire 1 includes tread band 2, shoulders 3, and sidewalls 4. The ends of tire 1 include a pair of beads 5, bead cores 6, bead filler 7, and reinforcement borders 8. Tire 1 further comprises radial carcass 9 with reinforcing elements arranged in a meridian plane. Tire 1 also includes a belt structure 10 arranged between the carcass 9 and the tread band 2.

Carcass 9 is formed of one or more carcass plies with edges 9' folded outward around bead cores 6. The structure of belt 10 comprises a group of belts formed of three rubberized fabrics 11, 12, 13 incorporating reinforcing elements. The first two radially innermost fabrics 11, 12, which are not considered deformable, comprise steel reinforcement cords 14 inclined at an angle to the equatorial plane of tire 1, so that the respective cords 14 crisscross each other. In one embodiment, respective cords 14 typically crisscross one another at an angle of 50°. Cords 14 may have a construction of the 2+1x0.28 type, a Young's modulus of 200,000 MPa, and a breaking load of 500 N.

The radially outermost fabric 13 comprises continuous reinforcing elements or straps 15 made from a shape-memory material. Reinforcing elements or straps 15 are substantially oriented at an angle of 0° to the equatorial plane of tire 1.

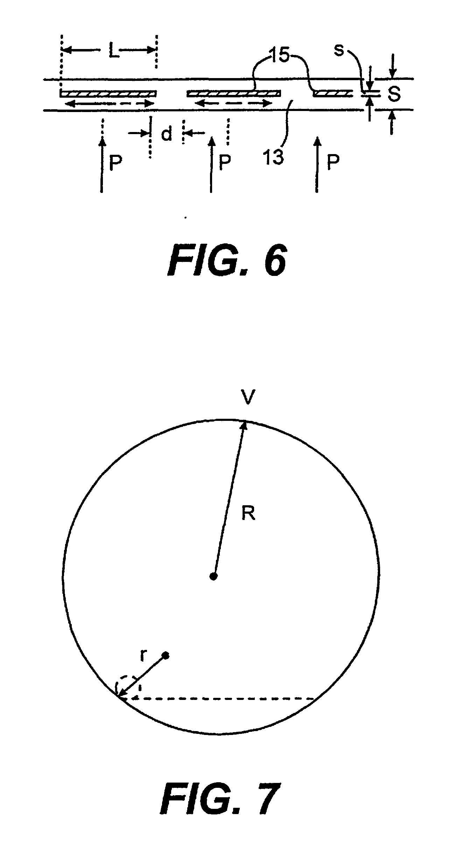

One characteristic of the present invention is that fabric 13 comprises means to stabilize reinforcing elements 15 in the predetermined position where they are incorporated in fabric 13. The position of reinforcing elements 15 is stabilized by shaping the reinforcing elements 15 into metal straps and placing them side-by-side in fabric 13, as is illustrated in the partial cross-section of Figure 6. In addition, the position of the metal straps 15 is stabilized because each strap 15 lies perpendicular to the direction of the force from the air pressure inside tire 1. The position of each strap 15 is stabilized further because the width of strap 15, designated by the value "L," is at least 1 mm. Both of these characteristics improve the resistance of strap 15 to compression into the elastomeric material in which metal strap 15 is incorporated, as explained above.

By way of a specific example of one embodiment of the present invention, the width "L" of metal strap 15 may be 3 mm. In cross-section, the thickness "s" of such a metal strap 15 would be 0.03 mm, and the thickness "S" of the rubberized fabric incorporating the coils of metal strap 15 coils would be 0.3 mm. Distance "d" between the ends of the contiguous metal straps would be between 0.5 and 3 mm.

According to the present invention, metal straps 15 are made of a shape-memory material which can be a metal alloy such as NiTi, NiTiX (where X is Fe, Cu, or Nb), FeNiCoTi, FeMnSi, CuZnAl, CuAlNi, CuAlBe, a FeMnSi-based alloy, or a FeNiCo-based alloy, whose characteristics result from structural transformations effected at determined temperatures characteristic of each alloy. Shape-memory materials of the type contemplated for the present invention are discussed and defined in the publication, "Engineering Aspects of Shape Memory Alloys" published by Butterworth-Heinemann, London (Ed. T.W. Duerig) (1990).

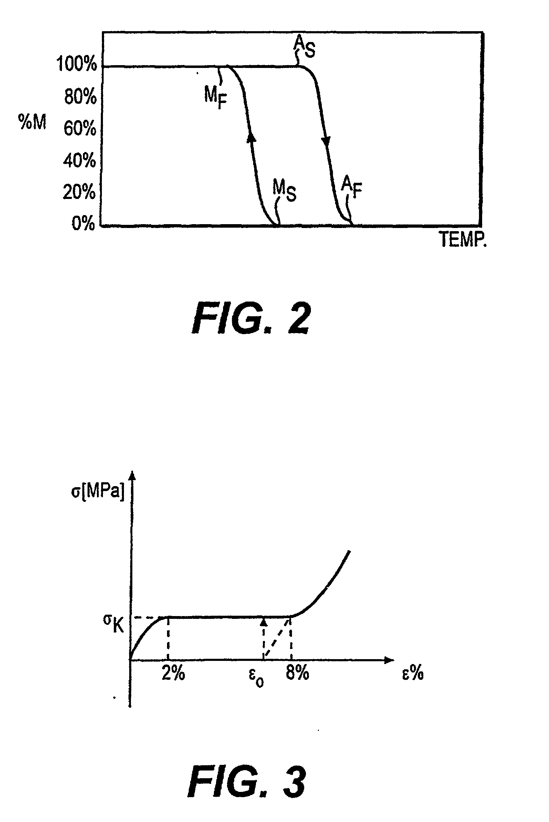

In general, each alloy has its own diagram of transformation from a martensitic state to an austenitic state and vice versa, as a function of specific temperatures, as shown in the graph of Figure 2. The graph of Figure 2 schematically reports the hysteresis loop of the percentage of martensite phase "M" as a function of temperature. More particularly, the graph of Figure 2 shows the passage from a 100% martensitic structure "M" to a totally austenitic structure and vice versa, in the direction indicated by the arrows.

The martensitic to austenitic transformation begins when the temperature of the shape-memory alloy reaches temperature $A_s$ and finishes when the temperature reaches temperature $A_f$. In a cooling phase, the material transforms from an austenitic structure at temperature $A_f$ to a martensitic structure. The martensitic transformation begins at temperature $M_s$ and the martensitic structure is completed when temperature $M_f$ is reached.

As a result of the aforementioned structural transformations, certain mechanical characteristics can be predicted. In particular, the transformation of die structure of the material obtained by heating from temperature $A_s$ to temperature $A_f$ creates stresses in shape-memory material that cause the material to tend to recover a previously memorized shape if the material was deformed when in a martensitic phase.

Before being incorporated into the elastomeric material of fabric 13, metal straps 15 are subjected to a heat treatment that is selected based on the shape-memory characteristics for the particular material. The heat treatment is selected to obtain the benefits of the four temperatures characteristic of a shape-memory alloy, respectively $M_s$, $M_f$, $A_s$, and $A_f$. The heat treatment is also selected to obtain the benefits of a predetermined shape, for example, a length value "$l_0$."

When metal strap 15 is cooled in the martensitic phase, strap 15 enters a stressed state and undergoes a pseudoplastic (pseudoelastic) elongation deformation. Figure 3 graphically illustrates this principle. A tensile stress F is imparted at room temperature to metal strap 15 before it is incorporated into the elastomeric material. Based on Figure 3, it is possible to predict the percent elongation to which metal strap 15 can be subjected. When the load ceases, metal strap 15 assumes a permanent percentage elongation whose value is determined by the following expression:

$$\varepsilon_0 = (l - l_0)/l_0,$$

where "$l$" represents the value of absolute elongation of metal strap 15. The possible range of the percentage of elongation obtainable at constant load generally is between 1% and 8%. Percentage elongation $\varepsilon_0$ may then be used subsequently in the vulcanization and operation phases of tire 1 to recover the predetermined shape by creating a force of contraction as a result of reaching temperatures $A_s$ and $A_f$, as explained below.

In the example considered, $\varepsilon_0$ is equal to 4 %, $A_s$ is equal to 60°C, and $A_f$ is equal to 80°C. Once subject to the initial deformation stress, metal straps 15 are then incorporated into elastomeric fabric 13 by known methods such as, for example, through a procedure using a rubberizing calender. The subsequent phases of tire manufacture, which concern the formation of the reinforcing belts 11, 12 and tread band 2 and also the assembly of these belts together with carcass 9 are known in the art.

Once all of the parts of tire 1 are assembled together, tire 1 is placed into a mold (preferably of the centripetal type, not shown), where tread band 2 is pressed and the vulcanization phase is carried out. During vulcanization, high-pressure air is introduced inside tire 1 and the temperature is increased to around 140°C.

Due to the high pressure applied to tire 1 during vulcanization, the two metallic belts 11, 12 expand. This expansion decreases the relative crossing angle between belts 11, 12 in such a way that tread band 2 moves toward the interior surface of the mold. The crown of the segments of the mold, on the other hand, is moved radially inward to imprint on tread band 2 the tread design engraved on their interior surfaces. Metal straps 15 exert a constraining force on the belts 11, 12 during vulcanization.

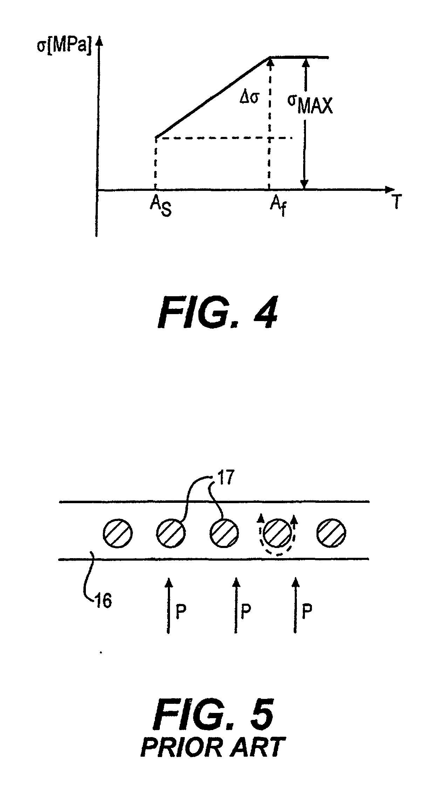

To clarify the functioning of metal straps 15 made from a shape-memory alloy, the behavior of the straps is represented in the graph of Figure 4, which plots the relative stresses in metal straps 15 against the temperatures to which they are subjected.

Metal straps 15 are heated to temperature $A_s$ to begin the structural transformation from a martensitic state to an austenitic state. The austenitic transformation is completed when the temperature $A_f$ is reached. During the austenitic transformation between the temperatures $A_s$ and $A_f$, metal straps 15 tend to recover the predetermined shape corresponding to previously memorized elongation "$I_0$." However, metal straps 15 only recover the memorized shape to the extent permitted by the constraints to which they are subjected.

In practice, once metal straps 15 are incorporated into tire 1, since they cannot recover the predetermined shape corresponding to a previously memorized elongation $I_0$, they develop inward contraction stresses that press against underlying metal belts 11, 12. The maximum force $F_{max}$ that can be applied against underlying belts 11, 12 is 54 N, for example, and is applied when metal straps 15 are at temperature $A_f$. Therefore, during vulcanization, the annular coils of metal straps 15 oppose the expansion of underlying metal belts 11, 12. This results in an equilibrium, allowing the tire's tread band 2 to be molded.

Due to heating during normal operation of a tire, the tire undergoes several thermal cycles, particularly in high-speed conditions where centrifugal forces that tend to raise the temperature of the innermost belt layers 11, 12 are manifested. Under such operating conditions, metal straps 15 become heated and exert an inward compression stress on belts 11, 12 just as during the vulcanizing process. The compressive force applied by metal straps 15, as represented in Figure 4, helps to minimize the effect of the outward bulging of the underlying belts 11, 12 as described above.

In additional embodiments of the present invention, tire 1 may have the following components:

1) Carcass 9

- ♦   incorporation of cords 9 in natural rubber with a hardness between 70 and 80 IRHD
- ♦   cords 9 of a Rayon material
- ♦   overall thickness of the incorporated ply between 1.1 and 1.25 mm
- ♦   construction of cords 9 of 1840x2 dtex
- ♦   density of cords 9=120 epd (ends per decimeter)

2) Internal belt 11 or 12

- ♦   incorporation of cords 14 in natural rubber, hardness between 60 and 85 IRHD
- ♦   construction of cords 14 of the type = 2+1x0.28
- ♦   overall thickness of each fabric between 1.1 and 1.3 mm
- ♦   breaking load of cords 14 between 450 and 500 N
- ♦   Young's modulus of cords 14 between 190 and 200 GPa
- ♦   density of cords 14 of a fabric = 85 epd
- ♦   angle of crossing between cords 14 of two fabrics 11, 12 = 50 degrees

3) External belt 13

- ♦   metal strap 15 of various alloys, preferentially NiTi, a NiTiX alloy (where X is Fe, Cu, or Nb), FeNiCoTi, FeMnSi, CuZnAl, CuAlNi, CuAlBe, an alloy with a FeMnSi-base, or an alloy with a FeNiCo-base
- ♦   thickness "s" of metal strap 15 between 0.02 mm and 0.1 mm
- ♦   width of metal strap 15 between 1 mm and 5 mm
- ♦   distance "d" between the contiguous ends of metal straps 15 between 0.1 and 3.5 mm
- ♦   incorporated in natural rubber with a hardness between 65 and 85 IRHD
- ♦   thickness of fabric comprised between 0.1 and 0.4 mm
- ♦   stress $F_k$ of deformation of each metal strap 15 at room temperature
- ♦   (Figure 3) between 50 and 150 MPa
- ♦   value of elongation $\varepsilon_0$ (Figure 3) between 2 and 8 %
- ♦   temperature value $A_s$ (Figure 4) between 40 and 90°C
- ♦   temperature value $A_f$ between 60 and 120°C
- ♦   value of the stress of contraction F at temperature ($A_s$ + 10°C) between 50 and 100 MPa
- ♦   value of maximum stress $F_{max}$ at temperature $A_f$ between 400 and 600 MPa

In accordance with the present invention, other embodiments include the combination of fabrics 11, 12 with the third rubberized fabric comprising metal straps 15 made from a metal alloy of a shape-memory material. In still other embodiments, the carcass ply can be made with cords made from metal alloys of shape-memory material. In these last examples, the shape-memory material of cords can be those already mentioned for metal straps 15 in third fabric 13.

The present invention successfully solves many of the problems in the prior art. Part of the success of the present invention is due to metal straps 15, which react quickly and completely to temperature changes to take advantage of the properties of the shape-memory materials from which they are constructed. Part of the success of the present invention is also due to the stabilization of metal straps 15 in the incorporating fabric 13 with a high resistance to fatigue, as explained below.

The advantages of stabilizing metal straps 15 in fabric 13 were determined by compression testing conducted according to the following description. A test segment of metal strap made from a shape-memory alloy was placed around a rubber roll 250 mm in diameter. In the test, an alloy of 35 at % Ni - 15 at % Cu - 50 at % Ti was used. The test segment of metal strap was 0.03 mm thick, had a width of 3 mm, and a length of 600 mm. To simulate pressure on the piece of metal strap 15, two weights, each weighing 1000 grams, were applied one to each end of the strap. The roll was coated with crude rubber of the type usually used in belts. The rubber coating was about 2 mm thick.

The following table, Table #1, indicates in the first column the values of width "L" of the segment of metal strap 15 that was tested, and in the second column the values of compression $\Delta_x$ found in relation to the load applied to the ends of the segment of metal strap.

Table #1

| | METAL STRAP | |
|---|---|---|
| **Width** | **Compression $\Delta_x$** | |
| **(mm)** | **(relative to metal strap with width = 6 mm)** | |
| 0.50 | 1165 | |
| 1.00 | 556 | |
| 1.50 | 370 | |
| 2.00 | 325 | |
| 2.50 | 227 | |
| 3.00 | 200 | |
| 3.50 | 182 | |
| 4.00 | 153 | |
| 4.50 | 140 | |
| 5.00 | 119 | |
| 5.50 | 118 | |
| 6.00 | 100 | |
| | | |
| | NYLON 6.6 CORD | |
| **Diameter** | **Compression $\Delta_x$** | |
| **(mm)** | **(relative to metal strap with width = 6 mm)** | |
| 0.25 | 1248 | |
| 0.39 | 728 | |

The results of the tests show practically negligible compression for a belt constructed according to the invention. In contrast, belts constructed according to the prior art exhibited a compression when compared with the results of the test with a metal strap.

To summarize and clarify the results obtained, reference will be made to Figures 5-10. Figures 5 and 6 compare two rubberized fabrics incorporating reinforcing elements arranged circumferentially to a tire (not illustrated). Both were subjected to air pressure P acting from the inside of the fabric toward the outside in the direction indicated by the arrows. The range of air pressures used to inflate the tire varied as a function of the dimension and type of application for the tire. Generally, however, the air pressures were within the range between 1.5 and 3.5 or more bars. Figure 5 illustrates a known construction for the rubberized, reinforced fabric. There, fabric 16 incorporated nylon cords 17 with an external diameter of 0.39 mm.

Figure 6 illustrates the construction of the rubberized, reinforced fabric according to the present invention. There, metal straps 15 were made of a shape-memory alloy. While each metal strap 15 may be separate from the others, it is also possible that the metal straps 15 can be wound in a spiral to form the coils illustrated in the cross-sectional diagram. In Figure 6, metal straps 15 have a width "L" of 1 mm and a thickness of 0.03 mm.

Figures 5 and 6 compare the different ways in which the air pressure affects the reinforcing cords and the rubberized fabric. For the rubberized fabric known in the prior art, the force from the air pressure is easily directed around the nylon cords in the fabric because of their small transverse dimension. As a result, the cords in the prior art tend to exert a cutting action on the elastomeric material when in the presence of high air pressure P, as is illustrated in Figure 5.

In contrast, the forces exerted by the air pressure when the belt is constructed according to the present invention produce a very different result. Because metal straps 15 present a considerably larger transverse dimension than nylon cords 17, the forces exerted by the air pressure do not create a situation where metal straps 15 tend to compress into or cut into the elastomeric material.

In practice, prior art nylon cords 17 tend to compress into the elastomeric material, while in the practice of the present invention, metal straps 15 tend to rise in a stable position in the elastomeric material. The same considerations are equally valid in the case in which the cords shown in Figure 5 are made from a metal alloy of a shape-memory material with the same or similar diameter as nylon cords 17.

For the rubberized fabric in prior art constructions, the reinforcing elements manifest a tendency to compress inwardly. In any case, the tendency is for the reinforcing cords to assume an undesirable position in the geometry of the design. In contrast, in the structure of the present invention, the fabric manifests a geometric stabilization of the reinforcing metal straps 15. Therefore, a fabric constructed according to the present invention makes full use of the functional characteristics of the shape-memory material from which metal straps 15 are constructed so that the fabric may achieve the desired resistance to centrifugal forces at high driving speeds as well as control over the wires in the tire during vulcanization.

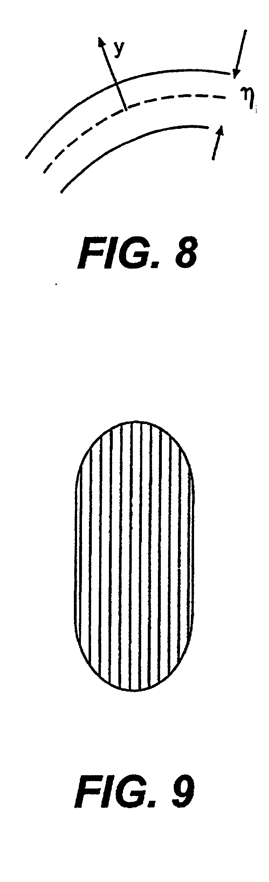

Figures 7 and 8 illustrate the mechanical characteristics of the high fatigue resistance of the zero-degree reinforcements according to the invention, relative to those found in the prior art. Figure 7 shows schematically, with a circumferential line, the tire as it rolls on the ground. More particularly, Figure 7 illustrates, for a good part of the circumference, the undeformed portion of the tire identified by a radius of curvature R and, in a broken line, the deformed portion corresponding to the area of the tire's imprint on the ground. The passage between the undeformed zone and the area of imprint is identified by a radius of curvature r, which is noticeably smaller than radius R.

In Figure 8, nylon cords 17 of Figure 5, each with a diameter of 0.39 mm, are represented in a partial longitudinal section of belt 16 in which they are incorporated. Nylon cords 17 are shown as they would be incorporated into the elastomeric fabric in the undeformed position of the tire, such as point V shown in Figure 7. At point V, the cords are subject to bending, but the outermost cords, when compared with cords along the longitudinal axis corresponding to neutral axis η, are stretched tautly. As a result, the cords undergo a deformation, which can be expressed, as is known, by the following equation:

$$\varepsilon = y/R$$

where y is the distance of the cord fibers from the neutral axis, measured according to axis y of the figure. The deformation value is greatest for the radially outermost fiber and assumes the value of the radius of the cord. R is the radius of curvature of the tire in the undeformed condition.

In the position of passage between the undeformed condition and the area of imprint, the cord assumes a new deformation determined by the following expression:

$$\varepsilon = y/r$$

where the value of y in the numerator remains the same as compared with the undeformed example, but the values in the denominator are considerably lower, r being less than R. In one example, radius R was 250 mm while radius r was 25 mm. The preceding considerations result in an elevated cyclical deformation at each point in the cord in the passage between the undeformed position and the deformed position.

Alternatively, if the reinforcing cords in the fabric are constructed according to the teachings of the present invention, such as those illustrated in Figure 6, and a fabric so constructed is incorporated into a tire, such as the one depicted in Figure 7, it becomes readily apparent that there is a considerably smaller cyclical deformation of the metal straps in the zone of passage between the undeformed and the deformed configurations of the tire. The invention provides this advantage because the deformation is determined by the thickness of metal straps 15, which is smaller than the diameter of the prior art cords. The same result can be obtained with the cords of figure 5 including shape-memory alloys materials.

In fact, the present invention contemplates a construction for metal straps 15 where the thickness of straps 15 is considerably less than the width of straps 15. For example, with a fabric thickness of at most 0.4 mm, preferably 0.3 mm, the thickness of metal straps 15 is expected to be between 0.02 and 0.1 mm.

In practice, the mechanical characteristics of a fabric constructed according to the teachings of the present invention are realized because the reinforcing elements have considerably smaller cyclic bending deformation stresses than the reinforcing cords taught by the prior art. As a result, this increases the fabric's resistance to fatigue when a fabric made according to the present invention is compared with fabrics made according to the teachings of the prior art. Therefore, as a result of the mechanical characteristics which can be derived from the practice of the present invention, it is possible to create a tire incorporating reinforcing elements made from a shape-memory alloy that overcomes a number of the failings present in tires constructed according to the prior art.

Moreover, the weight of a fabric constructed according to the present invention can be considerably reduced when compared with fabrics constructed according to the prior art. For example, a fabric, such as the one illustrated in Figure 5, has an overall thickness of 0.7 mm, far greater than the thickness of the fabric of Figure 6, which shows a fabric with a thickness 0.3 mm. This demonstrates that fabrics made in accordance with the present invention use less rubber and are, therefore, lighter than prior art fabrics. The automotive industry has had a longstanding demand for lighter tire constructions.

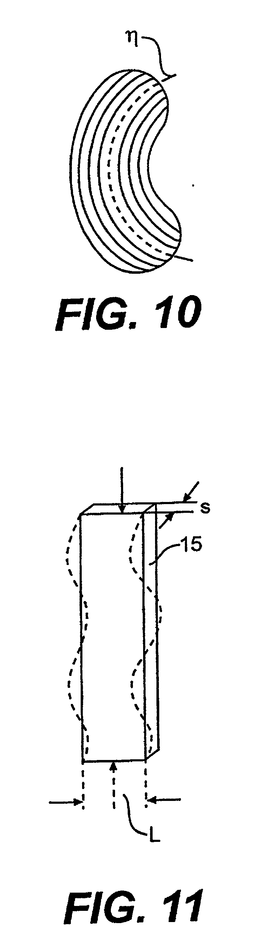

As mentioned, a fabric constructed according to the teachings of the present invention also offers improved resistance to the stresses occurring to the belts in the imprint area. In fact, it has been found that the behavior of belt fabrics, at the area of imprint, can be represented schematically, as is done in Figures 9 and 10. Figure 9 shows the imprint of a tire when the tire is running in a straight line while Figure 10, a bean-shaped imprint, shows the imprint of the tire when running around a curve.

In the representation of Figure 9, the zero-degree reinforcing elements have a rectilinear progression. However, the zero-degree reinforcing elements shown to the right of the neutral axis η in Figure 10 undergo compression stresses. The reinforcing elements that carry the highest loads collapse in the imprint area because the stress levels are high enough to cause deformation. However, on the remainder of the tire, where there is no imprint, the reinforcing elements do not collapse because they are interposed between the metal belts of the internal layers 11, 12 that are themselves not deformable.

In contrast, when the reinforcing elements of the present invention are studied, it can be observed that a collapse of one of the elements, as shown in Figure 11, would require compressive stresses that are higher than occur frequently in practice. In fact, the compressive stresses that are high enough to result in a "sideways" deformation of such a reinforcing element would have to be large enough to collapse a metal strip with a width between 1 mm and 5 mm. A cord from the prior art, such as the one illustrated in Figure 5 with a diameter of 0.39 mm, whether constructed from nylon or metal, is much more likely to collapse under the peak load in the imprint area than a reinforcing element that is three to fifteen times thicker, as in the construction of the present invention. Therefore, metal strap 15 according to the present invention is able to develop the characteristics of the shape-memory materials in operation when so required, even after having undergone cyclical stresses of compression, as represented schematically in Figure 10.

**Claims**

1. A rubberized fabric (13) for a tire belt comprising:

   an elastomeric material; and
   at least one reinforcing metal strap (15) in the elastomeric material, made from a shape-memory material, oriented at about 0° to an equatorial plane of the tire, having a width (L) of no less than about 1 mm and having a thickness (s) no greater than about 0.1 mm.

2. The rubberized fabric (13) of claim 1, wherein the rubberized fabric has a thickness (S) of no greater than about 0.4 mm.

3. The rubberized fabric (13) of claim 1, wherein the width (L) is between about 1 and 5 mm.

4. The rubberized fabric (13) of claim 1, wherein the thickness (s) of the at least one metal strap (15) is between about 0.02 and 0.1 mm.

5. The rubberized fabric (13) of claim 1, comprising a plurality of separate reinforcing metal straps (15) disposed in a side-by-side arrangement with a distance (d) between the straps of between about 0.1 and 3.5 mm.

6.  The rubberized fabric (13) of claim 1, wherein the at least one reinforcing metal strap (15) is a continuous metal strap wound helically with a distance (d) between adjacent turns of the metal strap between about 0.1 and 3.5 mm.

7.  The rubberized fabric (13) of claim 1, wherein the at least one reinforcing metal strap (15) has a thickness "s", the coils are axially displaced from one another a distance "d", the at least one layer of rubberized fabric has a thickness "S", and a proportional relationship between "s", "d", and "S" is identified by the following expression:

$$s <= d <= S$$

8.  The rubberized fabric (13) of claim 7, wherein distance "d" is between about 0.1 and 3.5 mm.

9.  The rubberized fabric (13) of claim 7, wherein thickness "s" is between about 0.02 and 0.1 mm.

10. The rubberized fabric (13) of claim 1, wherein the elastomeric material comprises natural rubber with a hardness between about 65 and 85 IRHD.

11. The rubberized fabric (13) of claim 1, wherein the shape-memory material is one selected from a NiTi alloy, a NiTiX alloy, where X is selected from a combination of Fe, Cu, or Nb, a CuZnAl alloy, a CuAlNi alloy, a CuAlBe alloy, a FeNiCoTi alloy, a FeMnSi alloy, an alloy with a FeMnSi-base, and an alloy with a FeNiCo-base.

12. The rubberized fabric (13) of claim 1, wherein the at least one reinforcing metal strap (15) has received a heat treatment in order to get a predetermined memorized length.

13. The rubberized fabric (13) of claim 12, wherein the at least one reinforcing metal strap (15), at room temperature and in a martensitic state, when subjected to a tensile stress F from an unvaried load, exhibits a percentage elongation between about 1 and 8%.

14. The rubberized fabric (13) of claim 1, wherein the at least one reinforcing metal strap (15) recovers a previously memorized shape by developing forces of contraction between a start temperature $A_s$ and a final temperature $A_f$, where
    As begins a transformation of a structure of the at least one reinforcing metal strap from a martensitic state to an austenitic state, and
    $A_f$ completes the transformation of the structure of the at least one reinforcing metal strap from the martensitic state to the austenitic state.

15. The rubberized fabric (13) of claim 14, wherein $A_s$ is between about 40°C and 90°C.

16. The rubberized fabric (13) of claim 14, wherein $A_f$ is between about 60°C and 120°C.

17. The rubberized fabric (13) of claim 14, wherein the stress of contraction of the at least one reinforcing metal strap (15) at temperature ($A_s$ + 10°C) is between about 50 and 100 MPa.

18. The rubberized fabric (13) of claim 14, wherein the maximum stress of the at least one reinforcing metal strap (15) at temperature $A_f$ is between about 400 and 600 MPa.

19. The rubberized fabric (13) of claim 1, wherein the at least one reinforcing metal strap (15) has a stress of deformation between about 50 and 150 MPa at room temperature.

20. A tire (1), comprising:

    a carcass (9);
    a tread band (2) on the carcass (9);
    a belt (11, 12, 13) positioned between the tread band (2) and the carcass (9) including at least one layer of rubberized fabric (13);
    at least one reinforcing metal strap (15) in the at least one layer of rubberized fabric (13), made of a shape-memory material oriented at about 0° to an equatorial plane of the tire (1), having a width (L) of no less than about 1 mm and a thickness (s) no greater than about 0.1 mm, and having coils disposed side-by-side in a direction substantially perpendicular to a radius of the tire (1).

**21.** The tire (1) of claim 20, wherein the rubberized fabric has a thickness (S) of no more than about 0.4 mm.

**22.** The tire (1) of claim 20, wherein the width (L) is between 1 and 5 mm.

**23.** The tire (1) of claim 20, wherein the thickness (s) of the at least one reinforcing metal strap (15) is between about 0.02 and 0.1 mm.

**24.** The tire (1) of claim 20, wherein said at least one layer of rubberized fabric (13) comprises a plurality of separate reinforcing metal straps (15) disposed in a side-by-side arrangement with a distance (d) between the straps of about 0.1 and 3.5 mm.

**25.** The tire (1) of claim 20, wherein the at least one reinforcing metal strap (15) is a continuous metal strap wound helically with a distance (d) between adjacent turns of the metal strap between about 0.1 and 3.5 mm.

**26.** The tire (1) of claim 20, wherein the at least one reinforcing metal strap (15) has a thickness "s", the coils are axially displaced from one another a distance "d", the at least one layer of rubberized fabric (13) has a thickness "S", and a proportional relationship between "s", "d", and "S" is identified by the following expression:

$$s <= d <= S$$

**27.** The tire (1) of claim 26, wherein distance "d" is between about 0.1 and 3.5 mm.

**28.** The tire (1) of claim 26, wherein thickness "s" is between about 0.02 and 0.1 mm.

**29.** The tire (1) of claim 20, wherein the rubberized fabric (13) comprises natural rubber with a hardness between about 65 and 85 IRHD.

**30.** The tire (1) of claim 20, wherein the shape-memory material is one selected from a NiTi alloy, a NiTiX alloy, where X is selected from a combination of Fe, Cu, or Nb, a CuZnAl alloy, a CuAlNi alloy, a CuAlBe alloy, a FeNiCoTi alloy, a FeMnSi alloy, an alloy with a FeMnSi-base, and an alloy with a FeNiCo-base.

**31.** The tire (1) of claim 20, wherein the at least one reinforcing metal strap (15) is in a heat-treated condition resulting in a predetermined memorized length.

**32.** The tire (1) of claim 20, wherein the at least one reinforcing metal strap (15), at room temperature and in a martensitic state, when subjected to a tensile stress F from an unvaried load, exhibits a percentage elongation between about 1 and 8%.

**33.** The tire (1) of claim 20, wherein the at least one reinforcing metal strap (15) recovers a previously memorized shape by developing forces of contraction between a start temperature $A_s$ and a final temperature $A_f$, where
$A_s$ begins a transformation of a structure of the at least one reinforcing metal strap from a martensitic state to an austenitic state, and
$A_f$ completes the transformation of the structure of the at least one reinforcing metal strap from the martensitic state to the austenitic state.

**34.** The tire (1) of claim 33, wherein $A_s$ is between about 40 and 90°C.

**35.** The tire (1) of claim 33, wherein $A_f$ is between about 60 and 120°C.

**36.** The tire (1) of claim 33, wherein the stress of contraction of the at least one reinforcing metal strap (15) at temperature ($A_s$ + 10°C) is between about 50 to 100 MPa.

**37.** The tire (1) of claim 33, wherein the maximum stress of the at least one reinforcing metal strap (15) at temperature

$A_f$ is between about 400 and 600 MPa.

**38.** The tire (1) of claim 20, wherein the at least one reinforcing metal strap (15) has a stress deformation between about 50 and 150 MPa at room temperature.

**Patentansprüche**

**1.** Gummiertes Gewebe (13) für einen Reifengurt, welches ein elastomeres Material und wenigstens ein verstärkendes Metallband (15) in dem elastomeren Material aufweist, das aus einem Formgedächtnismaterial hergestellt und mit etwa 0° zu einer äquatorialen Ebene des Reifens ausgerichtet ist sowie eine Breite (L) von weniger als etwa 1 mm und eine Dicke (s) von nicht mehr als etwa 0,1 mm hat.

**2.** Gummiertes Gewebe (13) nach Anspruch 1, bei welchem das gummierte Gewebe eine Dicke (S) von nicht mehr als etwa 0,4 mm hat.

**3.** Gummiertes Gewebe (13) nach Anspruch 1, bei welchem die Breite (L) zwischen etwa 1 und 5 mm liegt.

**4.** Gummiertes Gewebe (13) nach Anspruch 1, bei welchem die Dicke (s) des wenigstens einen Metallbands (15) zwischen etwa 0,02 und 0,1 mm liegt.

**5.** Gummiertes Gewebe (13) nach Anspruch 1 mit einer Vielzahl von gesonderten verstärkenden Metallbändern (15), die in einer Anordnung Seite an Seite mit einem Abstand (d) zwischen den Bändern angeordnet sind, der zwischen etwa 0,1 und 3,5 mm liegt.

**6.** Gummiertes Gewebe (13) nach Anspruch 1, bei welchem das wenigstens eine verstärkende Metallband (15) ein nicht unterbrochenes Metallband ist, das wendelförmig mit einem Abstand (d) zwischen benachbarten Windungen des Metallbandes gelegt ist, der zwischen etwa 0,1 und 3,5 mm liegt.

**7.** Gummiertes Gewebe (13) nach Anspruch 1, bei welchem das wenigstens eine verstärkende Metallband (15) eine Dicke "s" hat, die Windungen axial voneinander mit einem Abstand "d" versetzt sind, die wenigstens eine Schicht aus gummiertem Gewebe eine Dicke "S" hat und eine proportionale Beziehung zwischen "s", "d" und "S" durch den folgenden Ausdruck gekennzeichnet ist:

$$s <= d <= S$$

**8.** Gummiertes Gewebe (13) nach Anspruch 7, bei welchem der Abstand "d" zwischen etwa 0,1 und 3,5 mm liegt.

**9.** Gummiertes Gewebe (13) nach Anspruch 7, bei welchem die Dicke "s" zwischen etwa 0,02 und 0,1 mm liegt.

**10.** Gummiertes Gewebe (13) nach Anspruch 1, bei welchem das elastomere Material Naturkautschuk mit einer Härte zwischen etwa 65 und 85 IRHD aufweist.

**11.** Gummiertes Gewebe (13) nach Anspruch 1, bei welchem das Formgedächtnismaterial ein Material ist, das aus einer NiTi-Legierung, einer NiTiX-Legierung, wobei X aus einer Kombination von Fe, Cu oder Nb ausgewählt wird, einer CuZnAl-Legierung, einer CuAlNi-Legierung, einer CuAlBe-Legierung, einer FeNiCoTi-Legierung, einer FeMnSi-Legierung, einer Legierung mit einer FeMnSi-Basis, und einer Legierung mit einer FeNiCo-Basis ausgewählt ist.

**12.** Gummiertes Gewebe (13) nach Anspruch 1, bei welchem das wenigstens eine verstärkende Metallband (15) einer Wärmebehandlung unterworfen wurde, um eine vorher festgelegte gespeicherte Länge zu erhalten.

**13.** Gummiertes Gewebe (13) nach Anspruch 12, bei welchem das wenigsten eine verstärkende Metallband (15) bei Raumtemperatur und in einem martensitischen Zustand eine Prozentdehnung zwischen etwa 1 und 8% hat, wenn es einer Zugspannung F aus einer nicht variierten Last ausgesetzt wird.

**14.** Gummiertes Gewebe (13) nach Anspruch 1, bei welchem das wenigstens eine verstärkende Metallband (15) eine vorher gespeicherte Form wieder annimmt, indem Kontraktionskräfte zwischen einer Ausgangstemperatur $A_s$ und einer Endtemperatur $A_f$ entwickelt werden, wobei bei $A_s$ eine Transformation einer Struktur des wenigstens einen verstärkenden Metallbandes von einem martensitischen Zustand in einen austenitischen Zustand beginnt und bei $A_f$ die Transformation der Struktur des wenigstens einen verstärkenden Metallbandes von dem martensitischen Zustand in den austenitischen Zustand abgeschlossen ist.

15. Gummiertes Gewebe (13) nach Anspruch 14, bei welchem $A_s$ zwischen etwa 40°C und 90°C liegt.

16. Gummiertes Gewebe (13) nach Anspruch 14, bei welchem $A_s$ zwischen etwa 60°C und 120°C liegt.

17. Gummiertes Gewebe (13) nach Anspruch 14, bei welchem die Kontraktionsspannung des wenigstens einen verstärkenden Metallbandes (15) bei einer Temperatur ($A_s$ + 10°C) zwischen etwa 50 und 100 MPa liegt.

18. Gummiertes Gewebe (13) nach Anspruch 14, bei welchem die maximale Spannung des wenigstens einen verstärkenden Metallbands (15) bei der Temperatur $A_f$ zwischen etwa 400 und 600 MPa liegt.

19. Gummiertes Gewebe (13) nach Anspruch 1, bei welchem das wenigstens eine verstärkende Metallband (15) eine Verformungsspannung zwischen etwa 50 und 150 MPa bei Raumtemperatur hat.

20. Reifen (1)

   - mit einer Karkasse (9),
   - mit einem Laufflächenband (2) auf der Karkasse (9),
   - mit einem Gurt (11, 12, 13), der zwischen dem Laufflächenband (2) und der Karkasse (9) angeordnet ist, die wenigstens eine Schicht aus gummiertem Gewebe (13) aufweist, und
   - mit wenigstens einem verstärkenden Metallband (15) in der wenigstens einen Schicht aus gummiertem Gewebe (13), das aus einem Formgedächtnismaterial hergestellt und mit etwa 0° zu einer äquatorialen Ebene des Reifens (1) ausgerichtet ist, sowie eine Breite (L) von nicht weniger als etwa 1mm, eine Dicke (s) von nicht mehr als etwa 0,1 mm und Windungen hat, die Seite an Seite in einer Richtung im wesentlichen senkrecht zu einem Radius des Reifens (1) angeordnet sind.

21. Reifen (1) nach Anspruch 20, bei welchem das gummierte Gewebe eine Dicke (S) von nicht mehr als etwa 0,4 mm hat.

22. Reifen (1) nach Anspruch 20, bei welchem die Breite (L) zwischen 1 und 5 mm liegt.

23. Reifen (1) nach Anspruch 20, bei welchem die Dicke (s) des wenigstens einen verstärkenden Metallbandes (15) zwischen etwa 0,02 und 0,1 mm liegt.

24. Reifen (1) nach Anspruch 20, bei welchem die wenigstens eine Schicht aus gummiertem Gewebe (13) eine Vielzahl von gesonderten verstärkenden Metallbändern (15) aufweist, die in einer Anordnung Seite an Seite in einem Abstand (d) zwischen den Bändern von etwa 0,1 bis 3,5 mm angeordnet sind.

25. Reifen (1) nach Anspruch 20, bei welchem das wenigstens eine verstärkende Metallband (15) ein nicht unterbrochenes Metallband ist, das wendelförmig mit einem Abstand (d) zwischen benachbarten Windungen des Metallbandes von etwa 0,1 bis 3,5 mm gelegt ist.

26. Reifen (1) nach Anspruch 20, bei welchem das wenigstens eine verstärkende Metallband (15) eine Dicke "s" hat, die Windungen axial voneinander mit einem Abstand "d" versetzt sind, die wenigstens eine Schicht aus gummiertem Gewebe (13) eine Dicke "S" hat und eine proportionale Beziehung zwischen "s", "d" und "S" durch den folgenden Ausdruck gekennzeichnet ist

$$s <= d <= S$$

27. Reifen (1) nach Anspruch 26, bei welchem der Abstand "d" zwischen etwa 0,1 und 3,5 mm liegt.

28. Reifen (1) nach Anspruch 26, bei welchem die Dicke "s" zwischen etwa 0,02 und 0,1 mm liegt.

**29.** Reifen (1) nach Anspruch 20, bei welchem das gummierte Gewebe (13) Naturkautschuk mit einer Härte zwischen etwa 65 und 85 IRHD aufweist.

**30.** Reifen (1) nach Anspruch 20, bei welchem das Formgedächtnismaterial ein Material ist, das aus einer NiTi-Legierung, einer NiTiX-Legierung, wobei X aus einer Kombination von Fe, Cu oder Nb ausgewählt wird, einer CuZnAl-Legierung, einer CuAlNi-Legierung, einer CuAlBe-Legierung, einer FeNiCoTi-Legierung, einer FeMnSi-Legierung, einer Legierung mit einer FeMnSi-Basis und einer Legierung mit einer FeNiCo-Basis ausgewählt ist.

**31.** Reifen (1) nach Anspruch 20, bei welchem das wenigstens eine verstärkende Metallband (15) sich in einem wärmbehandelten Zustand befindet, der eine vorher festgelegte gespeicherte Länge ergibt.

**32.** Reifen (1) nach Anspruch 20, bei welchem das wenigstens eine verstärkende Metallband (15) bei Raumtemperatur und in einem martensitischen Zustand eine Prozentdehnung zwischen etwa 1 und 8 % hat, wenn es einer Zugspannung F aus einer nicht variierten Last ausgesetzt ist.

**33.** Reifen (1) nach Anspruch 20, bei welchem das wenigstens eine verstärkende Metallband (15) eine vorher gespeicherte Form wieder einnimmt, indem Kontraktionskräfte zwischen einer Ausgangstemperatur $A_s$ und einer Endtemperatur $A_f$ entwickelt werden, wobei bei $A_s$ eine Transformation einer Struktur des wenigstens einen verstärkenden Metallbandes von einem martensitischen Zustand in einen austenitischen Zustand beginnt und bei $A_f$ die Transformation der Struktur des wenigstens einen verstärkenden Metallbands aus dem martensitischen Zustand in den austenitischen Zustand abgeschlossen ist.

**34.** Reifen (1) nach Anspruch 33, bei welchem $A_s$ zwischen etwa 40 und 90°C liegt.

**35.** Reifen (1) nach Anspruch 33, bei welchem $A_f$ zwischen etwa 60 und 120°C liegt.

**36.** Reifen (1) nach Anspruch 33, bei welchem die Kontraktionsspannung des wenigstens einen verstärkenden Metallbandes (15) bei einer Temperatur ($A_s$ + 10°C) zwischen etwa 50 und 100 MPa liegt.

**37.** Reifen (1) nach Anspruch 33, bei welchem die maximale Spannung des wenigstens einen verstärkenden Metallbands (15) bei der Temperatur $A_f$ zwischen etwa 400 und 600 MPa liegt.

**38.** Reifen (1) nach Anspruch 20, bei welchem das wenigstens eine verstärkende Metallband (15) eine Spannungsverformung zwischen etwa 50 und 150 MPa bei Raumtemperatur hat.


**Revendications**

**1.** Tissu caoutchouté (13) pour ceinture de pneu comprenant :

un matériau élastomère ; et
au moins une lanière de renfort en métal (15) dans le matériau élastomère, faite d'un matériau à mémoire de forme, orientée à environ 0° par rapport à un plan équatorial du pneu, ayant une largeur (L) supérieure ou égale à environ 1 mm et ayant une épaisseur (s) inférieure ou égale à environ 0,1 mm.

**2.** Tissu caoutchouté (13) selon la revendication 1, dans lequel le tissu caoutchouté a une épaisseur (S) inférieure ou égale à environ 0,4 mm.

**3.** Tissu caoutchouté (13) selon la revendication 1, dans lequel la largeur (L) est comprise entre environ 1 et 5 mm.

**4.** Tissu caoutchouté (13) selon la revendication 1, dans lequel l'épaisseur (s) de ladite au moins une lanière en métal (15) est comprise entre environ 0,02 et 0,1 mm.

**5.** Tissu caoutchouté (13) selon la revendication 1, comprenant une pluralité de lanières de renfort en métal distinctes (15) placées côte à côte avec une distance (d) entre les lanières comprise entre environ 0,1 et 3,5 mm.

**6.** Tissu caoutchouté (13) selon la revendication 1, dans lequel ladite au moins une lanière de renfort en métal (15) est une lanière en métal continue enroulée en hélice avec une distance (d) entre les spires adjacentes de la lanière en métal comprise entre environ 0,1 et 3,5 mm.

7. Tissu caoutchouté (13) selon la revendication 1, dans lequel ladite au moins une lanière de renfort en métal (15) a une épaisseur "s", les bobines sont axialement déplacées les unes des autres d'une distance "d", ladite au moins une couche de tissu caoutchouté a une épaisseur "S", et une relation proportionnelle entre "s", "d" et "S" est identifiée par l'expression suivante :

$$s \leq d \leq S$$

8. Tissu caoutchouté (13) selon la revendication 7, dans lequel la distance "d" est comprise entre environ 0,1 et 3,5 mm.

9. Tissu caoutchouté (13) selon la revendication 7, dans lequel l'épaisseur "s" est comprise entre environ 0,02 et 0,1 mm.

10. Tissu caoutchouté (13) selon la revendication 1, dans lequel le matériau élastomère comprend du caoutchouc naturel présentant une dureté comprise entre environ 65 et 85 IRHD.

11. Tissu caoutchouté (13) selon la revendication 1, dans lequel le matériau à mémoire de forme est un matériau choisi parmi un alliage NiTi, un alliage NiTiX, où X est choisi parmi une combinaison de Fe, Cu ou Nb, un alliage CuZnAl, un alliage CuAlNi, un alliage CuAlBe, un alliage FeNiCoTi, un alliage FeMnSi, un alliage avec une base de FeMnSi, et un alliage avec une base de FeNiCo.

12. Tissu caoutchouté (13) selon la revendication 1, dans lequel ladite au moins une lanière de renfort en métal (15) a reçu un traitement thermique afin d'obtenir une longueur mémorisée préalablement déterminée.

13. Tissu caoutchouté (13) selon la revendication 12, dans lequel ladite au moins une lanière de renfort en métal (15), à la température ambiante et dans un état martensitique, lorsqu'elle est soumise à une contrainte de traction F à partir d'une charge uniforme, présente un allongement compris entre environ 1 et 8 %.

14. Tissu caoutchouté (13) selon la revendication 1, dans lequel ladite au moins une lanière de renfort en métal (15) retrouve une forme préalablement mémorisée en développant des forces de contraction entre une température de départ A, et une température finale $A_f$, où

A, commence une transformation d'une structure de ladite au moins une lanière de renfort en métal d'un état martensitique à un état austénitique, et

$A_f$ achève la transformation de la structure de ladite au moins une lanière de renfort en métal de l'état martensitique à l'état austénitique.

15. Tissu caoutchouté (13) selon la revendication 14, dans lequel $A_s$ est compris entre environ 40 °C et 90 °C.

16. Tissu caoutchouté (13) selon la revendication 14, dans lequel $A_f$ est compris entre environ 60 °C et 120 °C.

17. Tissu caoutchouté (13) selon la revendication 14, dans lequel la contrainte de contraction de ladite au moins une lanière de renfort en métal (15) à la température ($A_s$ + 10 °C) est comprise entre environ 50 et 100 MPa.

18. Tissu caoutchouté (13) selon la revendication 14, dans lequel la contrainte maximale de ladite au moins une lanière de renfort en métal (15) à la température $A_f$ est comprise entre environ 400 et 600 MPa.

19. Tissu caoutchouté (13) selon la revendication 1, dans lequel ladite au moins une lanière de renfort en métal (15) a une contrainte de déformation comprise entre environ 50 et 150 MPa à la température ambiante.

20. Pneu (1), comprenant :

une carcasse (9) ;
une bande de roulement (2) sur la carcasse (9) ;
une ceinture (11, 12, 13) positionnée entre la bande de roulement (2) et la carcasse (9) comprenant au moins une couche de tissu caoutchouté (13) ;

au moins une lanière de renfort en métal (15) dans ladite au moins une couche de tissu caoutchouté (13), faite d'un matériau à mémoire de forme orienté à environ 0° par rapport à un plan équatorial du pneu (1), ayant une largeur (L) supérieure ou égale à environ 1 mm et une épaisseur (s) inférieure ou égale à environ 0,1 mm, et comportant des bobines placées côte à côte dans une direction sensiblement perpendiculaire à un rayon du pneu (1).

**21.** Pneu (1) selon la revendication 20, dans lequel le tissu caoutchouté a une épaisseur (S) inférieure ou égale à environ 0,4 mm.

**22.** Pneu (1) selon la revendication 20, dans lequel la largeur (L) est comprise entre 1 et 5 mm.

**23.** Pneu (1) selon la revendication 20, dans lequel l'épaisseur (s) de ladite au moins une lanière de renfort en métal (15) est comprise entre environ 0,02 et 0,1 mm.

**24.** Pneu (1) selon la revendication 20, dans lequel ladite au moins une couche de tissu caoutchouté (13) comprend une pluralité de lanières de renfort en métal distinctes (15) placées côte à côte avec une distance (d) entre les lanières comprise entre environ 0,1 et 3,5 mm.

**25.** Pneu (1) selon la revendication 20, dans lequel ladite au moins une lanière de renfort en métal (15) est une lanière en métal continue enroulée en hélice avec une distance (d) entre les spires adjacentes de la lanière en métal comprise entre environ 0,1 et 3,5 mm.

**26.** Pneu (1) selon la revendication 20, dans lequel ladite au moins une lanière de renfort en métal (15) a une épaisseur "s", les bobines sont axialement déplacées les unes des autres d'une distance "d", ladite au moins une couche de tissu caoutchouté (13) a une épaisseur "S", et une relation proportionnelle entre "s", "d" et "S" est identifiée par l'expression suivante :

$$s \leq d \leq S$$

**27.** Pneu (1) selon la revendication 26, dans lequel la distance "d" est comprise entre environ 0,1 et 3,5 mm.

**28.** Pneu (1) selon la revendication 26, dans lequel l'épaisseur "s" est comprise entre environ 0,02 et 0,1 mm.

**29.** Pneu (1) selon la revendication 20, dans lequel le tissu caoutchouté (13) comprend du caoutchouc naturel présentant une dureté comprise entre environ 65 et 85 IRHD.

**30.** Pneu (1) selon la revendication 20, dans lequel le matériau à mémoire de forme est un matériau choisi parmi un alliage NiTi, un alliage NiTiX, où X est choisi parmi une combinaison de Fe, Cu ou Nb, un alliage CuZnAl, un alliage CuAlNi, un alliage CuAlBe, un alliage FeNiCoTi, un alliage FeMnSi, un alliage avec une base de FeMnSi, et un alliage avec une base de FeNiCo.

**31.** Pneu (1) selon la revendication 20, dans lequel ladite au moins une lanière de renfort en métal (15) est dans un état de traitement thermique résultant en une longueur mémorisée préalablement déterminée.

**32.** Pneu (1) selon la revendication 20, dans lequel ladite au moins une lanière de renfort en métal (15), à la température ambiante et dans un état martensitique, lorsqu'elle est soumise à une contrainte de traction F à partir d'une charge uniforme, présente un allongement compris entre environ 1 et 8 %.

**33.** Pneu (1) selon la revendication 20, dans lequel ladite au moins une lanière de renfort en métal (15) retrouve une forme préalablement mémorisée en développant des forces de contraction entre une température de départ $A_s$ et une température finale $A_f$, où

$A_s$ commence une transformation d'une structure de ladite au moins une lanière de renfort en métal d'un état martensitique à un état austénitique, et

$A_f$ achève la transformation de la structure de ladite au moins une lanière de renfort en métal de l'état martensitique à l'état austénitique.

**34.** Pneu (1) selon la revendication 33, dans lequel $A_s$ est compris entre environ 40 °C et 90 °C.

**35.** Pneu (1) selon la revendication 33, dans lequel $A_f$ est compris entre environ 60 °C et 120 °C.

**36.** Pneu (1) selon la revendication 33, dans lequel la contrainte de contraction de ladite au moins une lanière de renfort en métal (15) à la température ($A_s$ + 10 °C) est comprise entre environ 50 et 100 MPa.

**37.** Pneu (1) selon la revendication 33, dans lequel la contrainte maximale de ladite au moins une lanière de renfort en métal (15) à la température $A_f$ est comprise entre environ 400 et 600 MPa.

**38.** Pneu (1) selon la revendication 20, dans lequel ladite au moins une lanière de renfort en métal (15) a une contrainte de déformation comprise entre environ 50 et 150 MPa à la température ambiante.

**FIG. 1**

**FIG. 2**

**FIG. 3**

# FIG. 4

# FIG. 5
## PRIOR ART

## FIG. 6

## FIG. 7

**FIG. 8**

**FIG. 9**

η

**FIG. 10**

s

15

L

**FIG. 11**